(19) **Europäisches Patentamt / European Patent Office / Office européen des brevets**

(11) **EP 4 345 951 A1**

(12) **EUROPEAN PATENT APPLICATION**
published in accordance with Art. 153(4) EPC

(43) Date of publication:
03.04.2024 Bulletin 2024/14

(21) Application number: 22872181.7

(22) Date of filing: 26.09.2022

(51) International Patent Classification (IPC):
*H01M 4/58* (2010.01)

(52) Cooperative Patent Classification (CPC):
H01M 4/13; H01M 4/58; H01M 10/0525;
Y02E 60/10

(86) International application number:
PCT/CN2022/121210

(87) International publication number:
WO 2023/046137 (30.03.2023 Gazette 2023/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 26.09.2021 CN 202111132340

(71) Applicant: BYD Company Limited
Shenzhen, Guangdong 518118 (CN)

(72) Inventors:
• DU, Mengyi
Shenzhen, Guangdong 518118 (CN)
• CHEN, Sanzhi
Shenzhen, Guangdong 518118 (CN)
• HAO, Rong
Shenzhen, Guangdong 518118 (CN)

(74) Representative: Arnold & Siedsma
Bezuidenhoutseweg 57
2594 AC The Hague (NL)

(54) **METHOD FOR PREPARING LITHIUM IRON PHOSPHATE POSITIVE ELECTRODE MATERIAL, POSITIVE ELECTRODE POLE PIECE AND LITHIUM ION BATTERY**

(57) Disclosed are a method for preparing a lithium iron phosphate positive electrode material, a positive electrode plate and a lithium ion battery. The method includes: sequentially grinding, spray-drying and sintering a first mixture slurry containing iron phosphate, a lithium source, a carbon source and a solvent to obtain a spherical first lithium iron phosphate material; sequentially grinding, spray-drying, sintering and crushing a second mixture slurry containing iron phosphate, a lithium source, a carbon source and a solvent to obtain a second lithium iron phosphate material with an irregular morphology; and mixing the first and second lithium iron phosphate materials in equal mass ratio to obtain a lithium iron phosphate positive electrode material, the fitted value of the maximum compaction density of which is C, where

$C=0.0847t_1+0.0196T_1-0.0095t_2+0.0261T_2-33.6716$. $T_1$ and $t_1$ represent the sintering temperature and sintering time of the first lithium iron phosphate material respectively, $T_2$ and $t_2$ represent the sintering temperature and sintering time of the second lithium iron phosphate material respectively; $t_1$ and $t_2$ are within the range of 7h-11h, $T_1$ is within the range of 760°C-780°C, $T_2$ is within the range of 770°C-800°C; and C is 2.6g/cm$^3$ or more.

FIG. 1

SU8010 1.0kV-D 4.9mm x10.0k SE+BSE(U)    5.00um

EP 4 345 951 A1

## Description

## CROSS-REFERENCE TO RELATED APPLICATION

The present disclosure claims priority to Chinese Patent Application No. 202111132340.6, entitled "METHOD FOR PREPARING LITHIUM IRON PHOSPHATE POSITIVE ELECTRODE MATERIAL, POSITIVE ELECTRODE PLATE AND LITHIUM ION BATTERY" filed with China National Intellectual Property Administration on September 26, 2021, which is incorporated herein by reference in its entirety.

## FIELD

The present disclosure relates to the field of lithium ion batteries, and more specifically, to a method for preparing a lithium iron phosphate positive electrode material, a positive electrode plate and a lithium ion battery.

## BACKGROUND

Lithium iron phosphate material is widely used in power batteries because of its advantages such as high structural stability, good safety performance, moderate operating voltage and low cost. However, lithium iron phosphate has an obvious disadvantage of low compaction density (typically 2.1-2.3g/cm$^3$, rarely more than 2.6g/cm$^3$), which leads to the low specific capacity and energy density of batteries made of it, hindering the application of this material. Therefore, it is necessary to provide a battery positive electrode material with high compaction density and a method for preparing the same.

## SUMMARY

In view of this, the present disclosure provides a method for preparing lithium iron phosphate positive electrode material in which controllable adjustment of the high compaction density of the lithium iron phosphate positive electrode material mixed of two lithium iron phosphate materials can be realized by regulating the sintering temperature and time in the preparation process of the two lithium iron phosphate materials.

Specifically, in a first aspect, the present disclosure provides a method for preparing a lithium iron phosphate positive electrode material, including the steps of:

> sequentially grinding, spray-drying and sintering a first mixture slurry of iron phosphate, a lithium source, a carbon source and a solvent to obtain a first lithium iron phosphate material with a spherical morphology;
> sequentially grinding, spray-drying, sintering and crushing a second mixture slurry of iron phosphate, a lithium source, a carbon source and a solvent to obtain a second lithium iron phosphate material with an irregular morphology; and
> mixing the first lithium iron phosphate material and the second lithium iron phosphate material in equal mass ratio to obtain a lithium iron phosphate positive electrode material. The fitted value C of the maximum compaction density of the lithium iron phosphate positive electrode material satisfies the following relational expression:

$$C=0.0847t_1+0.0196T_1-0.0095t_2+0.0261T_2-33.6716;$$

> where $T_1$ and $t_1$ represent the sintering temperature and sintering time of the first lithium iron phosphate material respectively, and $T_2$ and $t_2$ represent the sintering temperature and sintering time of the second lithium iron phosphate material respectively, $t_1$ and $t_2$ are within the range of 7h-11h. For example, $t_1$ and $t_2$ are respectively independently 7h, 7.2h, 7.4h, 7.6h, 7.8h, 8h, 8.2h, 8.4h, 8.6h, 8.8h, 9h, 9.2h, 9.4h, 9.6h, 9.8h, 10h, 10.2h, 10.4h, 10.6h, 10.8h or 11h. $T_1$ is within the range of 760°C-780°C. For example, $T_1$ is 760°C, 762°C, 764°C, 766°C, 768°C, 770°C, 772°C, 774°C, 776°C, 778°C or 780°C. $T_2$ is within the range of 770°C-800°C. For example, $T_2$ is 770°C, 772°C, 774°C, 776°C, 778°C, 780°C, 782°C, 784°C, 786°C, 788°C, 790°C, 792°C, 794°C, 796°C, 798°C or 800°C. C is 2.6g/cm$^3$ or more.

In the present disclosure, by regulating the sintering temperature and time in the preparation process of two lithium iron phosphate materials with different morphologies, the positive electrode material mixed of the two materials is enabled to have higher maximum compaction density, and the fitted value C of the maximum compaction density of the obtained positive electrode material as determined based on the above relational expression is very close to the measured value, so that controllable preparation of the positive electrode material with desired high compaction density can be realized without the necessity to perform compaction density testing for the positive electrode plate manufactured from the obtained positive electrode material every time, thereby saving materials and time.

In the present disclosure, C is $2.6g/cm^3$ or more. At this time, the compaction density of the lithium iron phosphate positive electrode material is significantly higher than that of existing lithium iron phosphate positive electrode materials ($2.1g/cm^3$-$2.3g/cm^3$). In some implementations of the present disclosure, C is within the range of $2.6g/cm^3$-$2.85g/cm^3$. For example, it is $2.6g/cm^3$, $2.65g/cm^3$, $2.7g/cm^3$, $2.75g/cm^3$, $2.8g/cm^3$ or $2.85g/cm^3$. At this time, the lithium iron phosphate positive electrode material has high compaction density, and the battery made of it also has high specific capacity and energy density.

In the present disclosure, the first lithium iron phosphate material and the second lithium iron phosphate material are prepared in similar processes except that: in the process of preparing the second lithium iron phosphate material, crushing treatment is further performed after sintering. The first lithium iron phosphate material has a spherical morphology, and the second lithium iron phosphate material obtained through crushing has an irregular morphology. The lithium iron phosphate materials with these two morphologies are mixed in 1: 1 mass ratio, so that the second lithium iron phosphate material is sufficiently filled in the gap between the first lithium iron phosphate materials with a greater particle diameter, improving the fill rate and compaction density of the material mixed of the two. In some implementations, the crushing treatment can be carried out in a jet mill.

The maximum compaction density A of the first lithium iron phosphate material is lower than the maximum compaction density B of the second lithium iron phosphate material. In some implementations, A is within the range of $1.8g/cm^3$-$2.2g/cm^3$, e.g., $1.8g/cm^3$, $1.9g/cm^3$, $2.0g/cm^3$, $2.1g/cm^3$ or $2.2g/cm^3$, and B is within the range of $2.3g/cm^3$-$2.6g/cm^3$, e.g., $2.3g/cm^3$, $2.4g/cm^3$, $2.5g/cm^3$ or $2.6g/cm^3$. This is more beneficial for obtaining a lithium iron phosphate positive electrode material with a C value that is $2.6g/cm^3$ or more. It should be noted that, the maximum compaction density of a certain material mentioned in the present disclosure refers to the maximum compaction density of the positive electrode plate made of this material.

In an implementation of the present disclosure, the D50 particle size of the first lithium iron phosphate material is $3\mu m$-$10\mu m$, e.g., $3\mu m$, $4\mu m$, $5\mu m$, $6\mu m$, $7\mu m$, $8\mu m$, $9\mu m$ or $10\mu m$. The D50 particle size of the second lithium iron phosphate material is $0.5\mu m$ -$3\mu m$, e.g., $0.5\mu m$, $1\mu m$, $1.5\mu m$, $2\mu m$, $2.5\mu m$ or $3\mu m$. Generally, the D50 particle size of the first lithium iron phosphate material is greater than that of the second lithium iron phosphate material. This more beneficial for closer packing of the first lithium iron phosphate material with a spherical morphology and the second lithium iron phosphate material with an irregular morphology.

In the present disclosure, the composition of the first mixture slurry and the second mixture slurry may be the same or different. The lithium source in the first mixture slurry and the second mixture slurry may independently include but is not limited to one or more of lithium hydroxide (LiOH), lithium carbonate ($Li_2CO_3$), lithium oxalate ($Li_2C_2O_4$), lithium acetate ($CH_3COOLi$) and lithium nitrate ($LiNO_3$). In consideration of the loss of the lithium source in the later sintering process, in the present disclosure, in the first mixture slurry or the second mixture slurry, the mole of lithium element from the lithium source is controlled to be 1.00-1.05 times of the mole of the iron phosphate. In other words, in the first mixture slurry or second mixture slurry, the amount of the lithium source and the iron phosphate is such that the molar ratio of the lithium element to the iron element is (1.00-1.05) : 1.

The carbon source includes but is not limited to one or more of glucose, starch, phenolic resin, sucrose, cellulose, polyethylene glycol, citric acid, glycine, ethylenediamine tetraacetic acid, agar, acetylene black, ketjenblack, graphite, carbon nanotubes, graphene and the like. Among them, organic carbon sources such as glucose and starch can be decomposed in the sintering process to form a carbon coating on the surface of the lithium iron phosphate material to give it electrical conductivity, whereas inorganic carbon sources (such as acetylene black and graphite) will not be decomposed in the sintering process while a carbon coating can also be formed on the surface of the lithium iron phosphate material. An appropriate amount of carbon source can make the prepared lithium iron phosphate materials have good electrical conductivity as well as avoid reducing their specific charge-discharge capacity due to too many carbon coatings, which is beneficial to the improvement of electrochemical performance of the lithium iron phosphate materials. The amount of carbon source in the first mixture slurry can ensure that the carbon content in the prepared first lithium iron phosphate material is 0.5%-3wt%, e.g., 0.5wt%, 0.6wt%, 0.7wt%, 0.8wt%, 0.9wt%, 1wt%, 1.1wt%, 1.2wt%, 1.3wt%, 1.4wt%, 1.5wt%, 1.6wt%, 1.7wt%, 1.8wt%, 1.9wt%, 2wt%, 2.1wt%, 2.2wt%, 2.3wt%, 2.4wt%, 2.5wt%, 2.6wt%, 2.7wt%, 2.8wt%, 2.9wt% and 3wt%. The amount of carbon source in the second mixture slurry can ensure that the carbon content in the prepared second lithium iron phosphate material is 0.5%-3 wt%, e.g., 0.5wt%, 0.6wt%, 0.7wt%, 0.8wt%, 0.9wt%, 1wt%, 1.1wt%, 1.2wt%, 1.3wt%, 1.4wt%, 1.5wt%, 1.6wt%, 1.7wt%, 1.8wt%, 1.9wt%, 2wt%, 2.1wt%, 2.2wt%, 2.3wt%, 2.4wt%, 2.5wt%, 2.6wt%, 2.7wt%, 2.8wt%, 2.9wt% and 3wt%. In some implementations of the present disclosure, the carbon content in the first lithium iron phosphate material and the second lithium iron phosphate material is independently 0.8wt%-2.0wt% respectively.

In the present disclosure, the solvent in the first mixture slurry or the second mixture slurry independently includes one or more of water, fatty alcohol (such as methanol, ethanol, propanol, etc.), acetone, N-methylpyrrolidone and the like respectively.

The grinding described in the present disclosure can be carried out in equipment such as a ball mill, bead mill or sand mill, and in some implementations of the present disclosure, the grinding is carried out in grinding equipment with circulating cooling water. In the process of grinding the first mixture slurry or the second mixture slurry, the grinding power may be 0.5 kwh/kg-10kwh/kg, e.g., 1 kwh/kg, 2 kwh/kg, 5 kwh/kg, 8kwh/kg, etc.

In some implementations of the present disclosure, the D50 particle size of the ground first mixture slurry is $0.2\mu m$-$5\mu m$, e.g., $0.2\mu m$, $0.5\mu m$, $0.75\mu m$, $1\mu m$, $1.2\mu m$, $1.5\mu m$, $1.75\mu m$, $2\mu m$, $2.2\mu m$, $2.5\mu m$, $2.75\mu m$, $3\mu m$, $3.2\mu m$, $3.5\mu m$, $3.75\mu m$, $4\mu m$, $4.2\mu m$, $4.5\mu m$, $4.75\mu m$ or $5\mu m$. The D50 particle size of the ground second mixture slurry is $0.2\mu m$-$5\mu m$, e.g., $0.2\mu m$, $0.5\mu m$, $0.75\mu m$, $1\mu m$, $1.2\mu m$, $1.5\mu m$, $1.75\mu m$, $2\mu m$, $2.2\mu m$, $2.5\mu m$, $2.75\mu m$, $3\mu m$, $3.2\mu m$, $3.5\mu m$, $3.75\mu m$, $4\mu m$, $4.2\mu m$, $4.5\mu m$, $4.75\mu m$ or $5\mu m$. In this way, all raw materials can be fully compounded while too many bond breaks and lattice defects of all raw materials (which will affect the electrochemical performance of the prepared lithium iron phosphate material) can be avoided.

In an implementation of the present disclosure, in preparing the first lithium iron phosphate material and the second lithium iron phosphate material, the temperature of the inlet of the spray-drying is independently within the range of 150°C-280°C, e.g., 150°C, 160°C, 170°C, 180°C, 190°C, 200°C, 210°C, 220°C, 230°C, 240°C, 250°C, 260°C, 270°C or 280°C; and the temperature of the outlet is independently within the range of 80°C-120°C, e.g., 80°C, 90°C, 100°C, 110°C or 120°C.

The aforementioned $T_1$ and $T_2$ are the sintering holding temperatures in preparation of the first lithium iron phosphate material and the second lithium iron phosphate material. In some implementations of the present disclosure, in the sintering process, the heating rate at which the temperature rises to $T_1$ and $T_2$ may be 2°C/min-10°C/min, e.g., 2°C/min, 4°C/min, 6°C/min, 8°C/min or 10°C/min. An appropriate sintering holding time length (i.e., ti, tz) enables the lithium iron phosphate material to be fully crystallized with high crystallization completeness. In some further implementations of the present disclosure, the sintering holding time length is 8h-10h, e.g., 8h, 8.2h, 8.4h, 8.6h, 8.8h, 9h, 9.2h, 9.4h, 9.6h, 9.8h or 10h.

According to the method for preparing the lithium iron phosphate positive electrode material provided in the first aspect of the present disclosure, by regulating the sintering temperature and time in the preparation process of the two lithium iron phosphate materials with different morphologies, the compaction density of the lithium iron phosphate positive electrode material mixed of the two materials can be higher, and consequently the electrochemical performance of the battery manufactured therefrom can be better. The preparation method has a simple process and allows easy operation, and is suitable for large-scale production.

A second aspect of the present disclosure provides a positive electrode plate including a positive electrode collector and a positive electrode material layer provided on the surface of the positive electrode collector. The positive electrode material layer includes the lithium iron phosphate positive electrode material prepared by the aforementioned method, a conductive agent and a binder. It should be noted that, the conductive agent and the binder in the positive electrode material layer are both conventional materials in this art, and those skilled in the art can choose the materials according to actual needs, and not description will be made herein in this respect.

The maximum compaction density of the aforementioned positive electrode plate is substantially the same as the maximum compaction density C of the positive electrode material obtained through calculation according to the expression in the present disclosure. Therefore, the maximum compaction density of the positive electrode piece manufactured from the positive electrode material can be pre-estimated accurately according to the expression provided by the present disclosure without manufacturing the positive electrode material mixed of the first and second lithium iron phosphate materials into the positive electrode piece, thereby saving materials and time.

A third aspect of the present disclosure provides a lithium ion battery including a positive electrode plate.

The lithium ion battery further includes a negative electrode plate and electrolyte and a separator located between the positive electrode plate and the negative electrode plate.

The lithium ion battery adopting the aforementioned positive electrode plate with high compaction density has high specific discharge capacity and high energy density. The specific discharge capacity at the normal temperature of 0.1C of the button lithium ion battery adopting the aforementioned positive electrode plate may be 158mAh/g or more, and in some cases may be 160mAh/g or more.

Advantages of the examples of the present disclosure will be set forth in part in the description which follows, and in part will be obvious from the description, or may be learned by practice of the examples of the present disclosure.

## BRIEF DESCRIPTION OF THE DRAWINGS

Fig. 1 is a Scanning Electron Microscope (SEM) photo of the LFP-1 material used in Example 1; and
Fig. 2 is a SEM photo of the LFP-2 material used in Example 1.

## DETAILED DESCRIPTION

Exemplary implementations of the present disclosure are to be described below. It should be noted that, a person of ordinary skill in the art can further make several improvements and modifications without departing from the principle of the present disclosure, and these improvements and modifications shall fall within the protection scope of the present disclosure.

The technical solutions of the present disclosure are described below in conjunction with several specific examples.

**Example 1**

A method for preparing a lithium iron phosphate positive electrode material includes the following steps.

1) A first lithium iron phosphate material is prepared.

a. Iron phosphate, a lithium source (specifically $Li_2CO_3$) and a carbon source (specifically glucose monohydrate) are weighed according to the molar ratio of Li: Fe of 1.03: 1. The added amount of the carbon source can ensure that the carbon content in the first lithium iron phosphate material is 1.5wt%. These raw materials are dispersed into deionized water, and are uniformly mixed to prepare a mixture slurry with a solid content of 50wt%.

b. The mixture slurry is ground. The D50 particle size of the obtained material after grinding is about $0.35\mu$m. Then the ground slurry is spray-dried and granulated. The temperature of the inlet of the spray-drying equipment is 200°C, and the temperature of the outlet of the spray-drying equipment is 105°C.

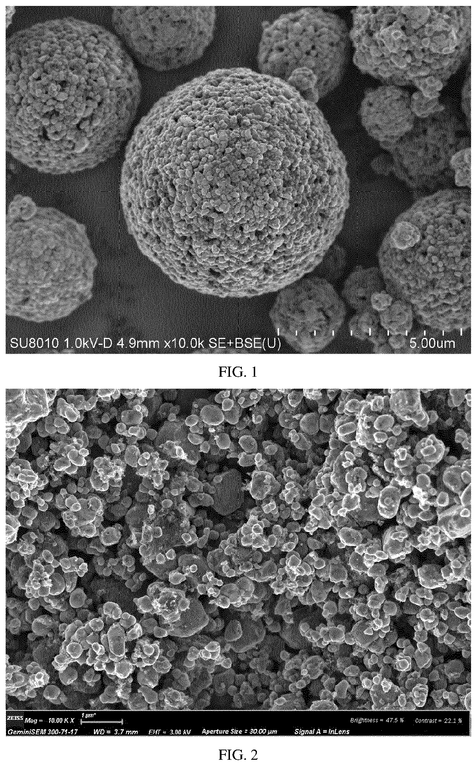

c. The granulated powder obtained by spray-drying is sintered in a nitrogen atmosphere. The sintering temperature $T_1$ in the sintering process is 775°C, and the sintering time $t_1$ is 9h. A first lithium iron phosphate material LFP-1 with a spherical morphology (the SEM photo is shown in Fig. 1) is obtained, and its particle diameter D50 is $4.80\mu$m. The LFP-1 material is prepared into a positive electrode plate (refer to the method described below in this example), and its maximum compaction density A is measured to be 2.04g/cm$^3$.

2) A second lithium iron phosphate material is prepared.

The differences from the preparation of LFP-1 are as follows. The sintering holding temperature $T_2$ is 793°C and the sintering holding time $t_2$ is 8.3h in the sintering process. Jet crushing is further performed after sintering to obtain a second lithium iron phosphate material LFP-2 with an irregular morphology (the SEM photo is shown in Fig. 2) having a particle diameter D50 of $1.02\mu$m. The LFP-2 material is prepared into a positive electrode plate, and its maximum compaction density B is measured to be 2.55g/cm$^3$.

3) The LFP-1 and LFP-2 are mixed in equal mass ratio to obtain a positive electrode material. The fitted value C=2.8991g/cm$^3$ of the maximum compaction density of the positive electrode material is obtained through calculation according to the aforementioned expression $C=0.0847t_1+0.0196T_1-0.0095t_2+0.0261T_2-33.6716$.

The positive electrode material is prepared into a positive electrode piece. The positive electrode material is mixed with the binder (specifically polyvinylidene fluoride, PVDF) and the conductive carbon black according to the mass ratio of 90:5:5, and an appropriate amount of N-methyl pyrrolidone pyrrole (NMP) is added therein, and the materials are uniformly mixed to obtain a positive electrode slurry. The positive electrode slurry is coated on one side of aluminum foil with carbon coating, dried, rolled and punched into a disc with a diameter of 15mm to obtain a positive electrode plate. The actual maximum compaction density of the positive electrode plate is measured to be 2.88g/cm$^3$, which is substantially the same as the compaction density C of the positive electrode material obtained through calculation according to the expression in the present disclosure.

The preparation of a lithium ion battery is as follows. A button battery is assembled in a glove box by using a positive electrode plate made of the above positive electrode material as a positive electrode, a lithium metal sheet as a negative electrode, a polypropylene film as a separator, and an ethylene carbonate (EC): dimethyl carbonate (DMC)=1:1 (volume ratio) solution containing 1.0mol/L of $LiPF_6$ as an electrolyte.

**Example 2**

A method for preparing a lithium iron phosphate positive electrode material is different from example 1 as follows.

The lithium source used for preparing the first lithium iron phosphate material and the second lithium iron phosphate material is LiOH, and the D50 particle sizes of the mixture slurries after grinding in the processes of preparing the first lithium iron phosphate material and the second lithium iron phosphate material are about $0.4\mu$m. In preparing the first lithium iron phosphate material LFP-1, the sintering temperature $T_1$ is 774°C and the sintering holding time $t_1$

is 10h. The particle diameter D50 of LFP-1 is measured to be 5.3$\mu$m and its maximum compaction density A is 2.05g/cm$^3$. In preparing the second lithium iron phosphate material LFP-2, the sintering temperature $T_2$ is 788°C and the sintering holding time $t_2$ is 9.8h. The particle diameter D50 of LFP-2 is measured to be 1.51$\mu$m and its maximum compaction density B is 2.51g/cm$^3$.

The fitted value C=2.8195g/cm$^3$ of the maximum compaction density of the positive electrode material manufactured in example 2 is obtained through calculation according to the aforementioned expression $C=0.0847t_1+0.0196T_1-0.0095T_2+0.0261T_2-33.6716$. If the positive electrode material is prepared into a positive electrode piece according to the same method as example 1, its actual maximum compaction density is measured to be 2.81g/cm$^3$, which is substantially the same as the result calculated from the expression. Meanwhile, the positive electrode piece of example 2 is assembled into a button battery according to the same method as example 1.

**Example 3**

A method for preparing a lithium iron phosphate positive electrode material is different from example 1 as follows.

The D50 particle sizes of the mixture slurries after grinding in the processes of preparing the first lithium iron phosphate material and the second lithium iron phosphate material are about 0.70$\mu$m. In preparing the first lithium iron phosphate material LFP-1, the sintering temperature $T_1$ is 770°C and the sintering holding time $t_1$ is 9h. The particle diameter D50 of LFP-1 is measured to be 6.10$\mu$m and its maximum compaction density A is 2.01g/cm$^3$. In preparing the second lithium iron phosphate material LFP-2, the sintering temperature $T_2$ is 795°C and the sintering holding time $t_2$ is 10.4h. The particle diameter D50 of LFP-2 is measured to be 1.32$\mu$m and its maximum compaction density B is 2.56g/cm$^3$.

The fitted value C=2.8334g/cm$^3$ of the maximum compaction density of the positive electrode material manufactured in example 2 is obtained through calculation according to the aforementioned expression $C=0.0847t_1+0.0196T_1-0.0095T_2+0.0261T_2-33.6716$. If the positive electrode material is prepared into a positive electrode piece according to the same method as example 1, its actual maximum compaction density is measured to be 2.82g/cm$^3$, which is substantially the same as the result calculated from the expression. Meanwhile, the positive electrode piece of example 3 is assembled into a button battery according to the same method as example 1.

**Example 4**

A method for preparing a lithium iron phosphate positive electrode material is different from example 1 as follows.

The D50 particle sizes of the mixture slurries after grinding in the processes of preparing the first lithium iron phosphate material and the second lithium iron phosphate material are about 1.24$\mu$m. In preparing the first lithium iron phosphate material LFP-1, the sintering temperature $T_1$ is 780°C and the sintering holding time $t_1$ is 8.8h. The particle diameter D50 of LFP-1 is measured to be 5.50$\mu$m and its maximum compaction density A is 2.07g/cm$^3$. In preparing the second lithium iron phosphate material LFP-2, the sintering temperature $T_2$ is 782°C and the sintering holding time tz is 10.3h. The particle diameter D50 of LFP-2 is measured to be 1.02$\mu$m and its maximum compaction density B is 2.45g/cm$^3$.

The fitted value C=2.67411g/cm$^3$ of the maximum compaction density of the positive electrode material manufactured in example 2 is obtained through calculation according to the aforementioned expression $C=0.0847t_1+0.0196T_1-0.0095T_2+0.0261T_2-33.6716$. If the positive electrode material is prepared into a positive electrode piece according to the same method as example 1, its actual maximum compaction density is measured to be 2.65g/cm$^3$, which is substantially the same as the result calculated from the expression. Meanwhile, the positive electrode piece of example 4 is assembled into a button battery according to the same method as example 1.

**Example 5**

A method for preparing a lithium iron phosphate positive electrode material is different from example 1 as follows.

The D50 particle sizes of the mixture slurries after grinding in the processes of preparing the first lithium iron phosphate material and the second lithium iron phosphate material are about 1.12$\mu$m. In preparing the first lithium iron phosphate material LFP-1, the sintering temperature $T_1$ is 778°C and the sintering holding time $t_1$ is 10.6h. The particle diameter D50 of LFP-1 is measured to be 6.8$\mu$m and its maximum compaction density A is 2.10g/cm$^3$. In preparing the second lithium iron phosphate material LFP-2, the sintering temperature $T_2$ is 775°C and the sintering holding time $t_2$ is 8.6h. The particle diameter D50 of LFP-2 is measured to be 1.96$\mu$m and its maximum compaction density B is 2.40g/cm$^3$.

The fitted value C=2.62082g/cm$^3$ of the maximum compaction density of the positive electrode material manufactured in example 3 is obtained through calculation according to the aforementioned expression $C=0.0847t_1+0.0196T_1-0.0095T_2+0.0261T_2-33.6716$. If the positive electrode material is prepared into a positive electrode piece according to the same method as example 1, its actual maximum compaction density is measured to be 2.61g/cm$^3$,

which is substantially the same as the result calculated from the expression. Meanwhile, the positive electrode piece of example 3 is assembled into a button battery according to the same method as example 1.

The specific discharge capacity and the initial coulombic efficiency test of the positive electrode material are carried out on the button battery of the examples, in which the button battery is charged and discharged at a constant current of 0.1 C in the voltage range of 2.5-3.8V. The results are summarized in Table 1 below.

Table 1

| Test Item | Specific discharge capacity at 0.1C (mAh/g) | Initial efficiency (%) |
| --- | --- | --- |
| Example 1 | 161.5 | 99.18 |
| Example 2 | 160.9 | 99.04 |
| Example 3 | 161.9 | 99.14 |
| Example 4 | 159.4 | 98.93 |
| Example 5 | 158.1 | 98.37 |

It can be known from Table 1 that the maximum compaction density of the positive electrode plate manufactured from the positive electrode material in the examples of the present application is high, and the button battery including the positive electrode plate has excellent electrochemical performance and high specific discharge capacity, which is beneficial to improving the energy density of the battery.

The foregoing examples show only several implementations of the present disclosure and are described specifically and in detail. This description, however, is not to be construed as a limitation to the scope of the present disclosure. It should be noted that for a person of ordinary skill in the art, several variations and improvements can be made without departing from the idea of the present disclosure. These variations and improvements all fall within the protection scope of the present disclosure. Therefore, the protection scope of the present disclosure is defined by the following claims.

**Claims**

1. A method for preparing a lithium iron phosphate positive electrode material, comprising the steps of:

sequentially grinding, spray-drying and sintering a first mixture slurry of iron phosphate, a lithium source, a carbon source and a solvent to obtain a first lithium iron phosphate material with a spherical morphology;
sequentially grinding, spray-drying, sintering and crushing a second mixture slurry of iron phosphate, a lithium source, a carbon source and a solvent to obtain a second lithium iron phosphate material with an irregular morphology; and
mixing the first lithium iron phosphate material and the second lithium iron phosphate material in equal mass ratio to obtain a lithium iron phosphate positive electrode material; where a fitted value of a maximum compaction density of the lithium iron phosphate positive electrode material is denoted by C, and C satisfies the following relational expression:

$$C=0.0847t_1+0.0196T_1-0.0095t_2+0.0261T_2-33.6716;$$

where $T_1$ and $t_1$ represent a sintering temperature and a sintering time of the first lithium iron phosphate material respectively, and $T_2$ and $t_2$ represent a sintering temperature and a sintering time of the second lithium iron phosphate material respectively; $t_1$ and $t_2$ are within a range of 7h-11h, $T_1$ is within a range of 760°C-780°C, and $T_2$ is within a range of 770°C-800°C; and C is 2.6g/cm$^3$ or more.

2. The method according to claim 1, wherein C is within the range of 2.6g/cm$^3$-2.85g/cm$^3$.

3. The method according to claim 1 or 2, wherein a maximum compaction density of the first lithium iron phosphate material is lower than a maximum compaction density of the second lithium iron phosphate material.

4. The method according to any of claims 1 to 3, wherein a maximum compaction density of the first lithium iron phosphate material is within a range of 1.8g/cm$^3$-2.2g/cm$^3$; and a maximum compaction density of the second lithium iron phosphate material is within a range of 2.3g/cm$^3$-2.6g/cm$^3$.

5. The method according to any of claims 1 to 4, wherein a D50 particle size of the first lithium iron phosphate material is 3$\mu$m-10$\mu$m.

6. The method according to any of claims 1 to 5, wherein a D50 particle size of the second lithium iron phosphate material is 0.5$\mu$m-3$\mu$m.

7. The method according to any of claims 1 to 6, wherein a D50 particle size of the ground first mixture slurry or second mixture slurry is within a range of 0.2$\mu$m-5$\mu$m.

8. The method according to any of claims 1 to 7, wherein in the first mixture slurry or the second mixture slurry, the mole of lithium element in the lithium source is 1.00-1.05 times of the mole of the iron phosphate.

9. A positive electrode plate comprising the lithium iron phosphate positive electrode material prepared by the method according to any of claims 1 to 9.

10. A lithium ion battery comprising the positive electrode plate according to claim 9.

FIG. 1

FIG. 2

## INTERNATIONAL SEARCH REPORT

| International application No. |
| --- |
| **PCT/CN2022/121210** |

**A.    CLASSIFICATION OF SUBJECT MATTER**

H01M 4/58(2010.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; ENTXT; CNKI: 磷酸铁锂, 粒径, 大, 小, 不同, 颗粒, lithium iron phosphate, LiFePO4, grain size, large, big, little, small, different, particle

**C.    DOCUMENTS CONSIDERED TO BE RELEVANT**

| Category* | Citation of document, with indication, where appropriate, of the relevant passages | Relevant to claim No. |
| --- | --- | --- |
| X | CN 113086959 A (YAAN LISHENG XINNENG ENTERPRISE MANAGEMENT CENTER (LIMITED PARTNERSHIP)) 09 July 2021 (2021-07-09) <br> description, paragraphs 5-72, and figures 1-2 | 1-10 |
| A | CN 109665508 A (ZHONGTIAN XINXING MATERIALS CO., LTD.) 23 April 2019 (2019-04-23) <br> description, paragraphs 3-66 | 1-10 |
| A | KR 20140098424 A (LG CHEMICAL LTD.) 08 August 2014 (2014-08-08) <br> entire document | 1-10 |
| A | CN 111217347 A (SHENZHEN CITY BATTERY NANOMETER TECHNOLOGY CO., LTD.) 02 June 2020 (2020-06-02) <br> entire document | 1-10 |
| A | CN 109336079 A (ZHEJIANG RICHPOWER TECHNOLOGY CO., LTD.) 15 February 2019 (2019-02-15) <br> entire document | 1-10 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **17 November 2022** | **02 December 2022** |

| Name and mailing address of the ISA/CN | Authorized officer |
| --- | --- |
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2022/121210**

| Patent document cited in search report | | | Publication date (day/month/year) | Patent family member(s) | | | Publication date (day/month/year) |
|---|---|---|---|---|---|---|---|
| CN | 113086959 | A | 09 July 2021 | CN | 113086959 | B | 01 March 2022 |
| CN | 109665508 | A | 23 April 2019 | None | | | |
| KR | 20140098424 | A | 08 August 2014 | KR | 101610753 | B1 | 08 April 2016 |
| CN | 111217347 | A | 02 June 2020 | None | | | |
| CN | 109336079 | A | 15 February 2019 | None | | | |

Form PCT/ISA/210 (patent family annex) (January 2015)

**EP 4 345 951 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111132340